# NEUE EUROPÄISCHE PATENTSCHRIFT

(11) **EP 1 799 479 B2**
(45) Veröffentlichungstag und Bekanntmachung des Hinweises auf die Entscheidung über den Einspruch: **27.11.2013**
(45) Hinweis auf die Patenterteilung: 06.01.2010
(21) Anmeldenummer: 05775070.5
(22) Anmeldetag: 17.08.2005
(51) Int. Cl.: B60W 10/10

(54) **ANTRIEBSEINHEIT FÜR EIN KRAFTFAHRZEUG MIT HYBRIDANTRIEB**
DRIVE UNIT FOR A MOTOR VEHICLE COMPRISING A HYBRID PROPULSION
UNITE D'ENTRAINEMENT POUR UN VEHICULE AUTOMOBILE A SYSTEME HYBRIDE DE PROPULSION

(30) Priorität: 17.09.2004 DE 102004045269
(43) Veröffentlichungstag der Anmeldung: 27.06.2007
(73) Patentinhaber: Bayerische Motoren Werke Aktiengesellschaft, 80809 München (DE)
(72) Erfinder: LIEBL, Johannes, 85368 Moosburg (DE); BERTRAM, Michael, 80937 München (DE)
(86) Internationale Anmeldenummer: PCT/EP2005/008924
(87) Internationale Veröffentlichungsnummer: WO 2006/032334

(56) Entgegenhaltungen:
- EP-A- 0 768 204
- JP-A- 07 231 506
- JP-A- 09 009 414
- JP-A- 2003 269 597
- JP-A- 2004 019 641
- JP-A- 2004 142 599
- US-A- 5 935 040
- US-A1- 2004 029 678

## Beschreibung

Die Erfindung betrifft eine Antriebseinheit für ein Kraftfahrzeug mit Hybridantrieb gemäß dem Oberbegriff des Anspruchs 1.

Es sind bereits verschiedenste Hybridfahrzeug-Konzepte mit den Antriebsquellen Brennkraftmaschine und elektrische Maschine bekannt. Aus der Fachzeitschrift "Auto Motor Sport", Ausgabe 11/2004, Seite 62 ff., Fahrbericht: Tausendsassa, ist ein Fahrbericht zu einem BMW X5 bekannt. Hier wird bereits ein gattungsbildendes Fahrzeug beschrieben, welches in einem unteren Drehzahlbereich bis zirka 3500 Umdrehungen den Antrieb durch eine Kombination von herkömmlicher Brennkraftmaschine und elektrischer Maschine bewerkstelligt. Durch die Addition der Drehmomente der beiden Antriebsaggregate wird hier im unteren Drehzahlbereich bei 1000 Umdrehungen bereits ein Drehmoment von 1000 Newtonmetern bereitgestellt. Erst bei Erreichen von 3500 Umdrehungen wird die elektrische Maschine vom Antriebsstrang entkoppelt und der Antrieb ausschließlich durch die Brennkraftmaschine in alt bekannter Weise realisiert. Bei derartigen Systemen kann es allerdings vorkommen, dass bei identischen Fahrerwünschen bzw. Lastanforderungen zu Zeitpunkten mit deutlich unterschiedlichem Ladezustand des Energiespeichers dem Fahrer ein unterschiedliches (nicht zuverlässig reproduzierbares) Anfahrdrehmoment zur Verfügung steht.

Der Erfindung liegt die Aufgabe zugrunde, eine Antriebseinheit für ein Hybrid-Kraftfahrzeug anzugeben, die für gleiche Lastanforderungen möglichst stets ein gleiches Anfahrmoment, unabhängig vom Ladezustand des Energiespeichers für den Elektroantrieb, bereitstellt.

Erfindungsgemäß wird die Aufgabe durch die Gesamtheit der Merkmale des Anspruchs 1 gelöst. Durch eine stete Überwachung des Ladezustands des Energiespeichers für den motorischen Betrieb der elektrischen Maschine und eine hiervon abhängige Einstellung der Getriebeübersetzung zur Erzeugung des auf die Antriebsräder wirkenden Antriebmoments wird, nahezu unabhängig vom Ladezustand des Energiespeichers, bei gleicher Lastanforderung stets das gleiche Antriebsmoment bereitgestellt. Hierfür wird der zusätzlich zu einer herkömmlichen Starterbatterie vorhandene und vorzugsweise als Kondensatoranordnung ausgebildete Energiespeicher für die elektrische Maschine auf eine Ladungsschwelle hin überwacht. Sollte diese definierte Ladungsschwelle unterschritten werden und bei vorliegendem aktuellen Ladungszustand eine entsprechende Lastanforderung, die beispielsweise nicht alleine durch die Brennkraftmaschine erfüllt werden kann, vorliegen, wird über eine Steuereinheit die Getriebeeinheit auf eine kleinere Gangübersetzung eingestellt, mit der die entsprechende Lastanforderung (angefordertes Lastmoment) erfüllt werden kann. Hierfür weist die Getriebeeinheit erfindungsgemäß zumindest eine zusätzliche Gangstufe auf, die ausschließlich bei Unterschreitung der vordefinierten Ladungsschwelle und ausschließlich während des Anfahrvorgangs aktiviert wird. Alternativ zu einer zusätzlichen Gangstufe in der herkömmlichen Getriebeeinheit ist auch denkbar ein separates Vorschaltgetriebe mit entsprechender Übersetzung und Ansteuermöglichkeit vorzusehen. Insbesondere die Funktionalität eines stufenlos einstellbaren Vorschaltgetriebes würde den Anforderungen nach der Bereitstellung eines stets gleichen Anfahrmomentes für gleiche Lastanforderungen gerecht. Erfindungswesentlich ist lediglich, dass in Abhängigkeit vom Ladungszustand des Energiespeichers der Anfahrvorgang in einer Standardgangstufe erster Übersetzung oder ein Anfahrvorgang in der Anfahrgangstufe erfolgt, wobei die Anfahrübersetzung ein kleineres Übersetzungsverhältnis aufweist als die Standardgangstufe. Hierdurch wird erreicht, dass für jede Lastanforderung zu jeder Zeit, unabhängig vom Ladezustand des Energiespeichers, ein reproduzierbares Anfahrverhalten gewährleistet wird.

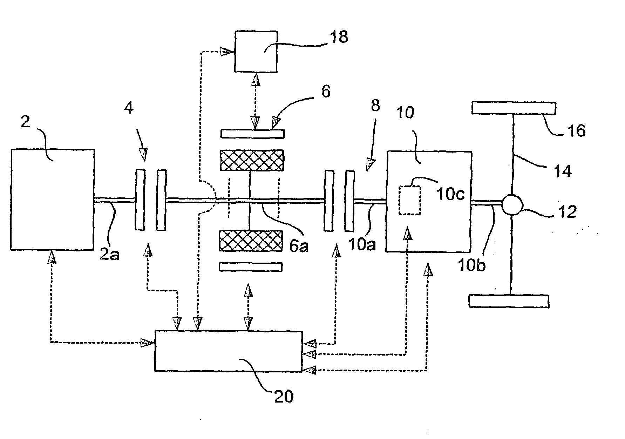

Im Folgenden wird die Erfindung anhand einer Figur näher erläutert. Die einzige Figur zeigt den Antriebsstrang eines Hybrid-Kraftfahrzeugs umfassend, in Serie hintereinander angeordnet, eine Brennkraftmaschine 2, die über ihre Abtriebswelle 2a und eine Kupplung 4 mit der Antriebswelle 6a einer zumindest motorisch betreibbaren elektrischen Maschine 6 verbunden ist sowie umfassend eine Getriebeeinheit 10, über deren Eingangswelle 10a die elektrische Maschine 6 mit ihrer Antriebswelle 6a über eine weitere Kupplung 8 kraftgekoppelt ist. Die beiden Kupplungen 4, 8 sind lediglich optional im Antriebsstrang angeordnet. Abtriebsseitig wirkt die Getriebeeinheit 10 über ihre Abtriebswelle 10b, ein Differential 12 und Antriebsachsen 14 auf die Antriebsräder 16. Die Energieversorgung der elektrischen Maschine 6 - die vorzugsweise ausschließlich zur Erhöhung des Drehmomentes beim Anfahrvorgang und während Beschleunigungsvorgängen mit hohen Lastanforderungen eingesetzt wird - erfolgt vorwiegend oder ausschließlich über eine Kondensatoranordnung 18 mit Mehrschichtkondensatoren hoher Leistungsdichte, sogenannten Super- oder Ultra-Caps. Die Kondensatoranordnung 18 wird entweder über die vorhandene (nicht dargestellte) Bordnetzbatterie (bzw. Starterbatterie) und/oder während des Rekuperationsbetriebs des Hybrid-Kraftfahrzeugs geladen. Insbesondere durch die Aufladung per Bordnetzbatterie kann zu den meisten Zeiten ein ausreichender Ladezustand der Kondensatoranordnung 18 gewährleistet werden.

Die Koordination der einzelnen Komponenten des Antriebsstranges erfolgt über eine Steuereinheit 20 oder eine Mehrzahl (nicht dargestellt) einzelner den einzelnen Komponenten zugeordneten Steuergeräten. Erfindungsgemäß weist die Getriebeeinheit 10 mindestens eine zusätzliche Anfahrgangstufe 10c auf, die nur bei Vorliegen definierter Bedingungen (Unterschreiten einer definierten Ladungsschwelle des Energiespeichers 18) und ausschließlich während eines Anfahrvorgangs aus dem Stillstand des Fahrzeugs aktivierbar ist.
In einer besonders bevorzugten Ausführung der Erfindung ist ein herkömmliches Getriebe dabei lediglich mit einer zusätzlichen Gangstufe mit entsprechend kürzerer Übersetzung ausgebildet. Die zusätzliche Anfahrstufe umfasst im Sinne der Erfindung aber auch ein Vorschaltgetriebe, welches beispielsweise als separate Komponente ausgebildet ist. Dabei kann die in die Getriebeeinheit 10 als integrierte oder separat ausgeführte Anfahrgangstufe 10c auch als kontinuierlich schaltende Einheit (sogenanntes CVT-Getriebe, Continous Variable Transmission) ausgeführt sein.

Die Steuereinheit 20 ist gemäß der Erfindung derart ausgebildet, dass in Abhängig vom Ladezustand des Energiespeichers 18 der Anfahrvorgang in einer Standardgangstufe erster Übersetzung oder ein Anfahrvorgang in der Anfahrgangstufe 10c mit einer von der ersten Übersetzung verschiedenen Übersetzung der Getriebeeinheit erfolgt. Weist der Energiespeicher 18 einen Ladungszustand oberhalb der definierten Ladungsschwelle auf, erfolgt der Anfahrvorgang wie bei einem herkömmlichen Hybrid-Kraftfahrzeug in der dafür vorgesehenen Standard-Anfahrgangstufe. Weist der Energiespeicher 18 hingegen einen Ladungszustand auf, der Unterhalb oder gleich der definierten Ladungsschwelle ist, wird die Getriebeeinheit 10 über die Steuereinheit 20 veranlasst den Anfahrvorgang mit der erfindungsgemäßen zusätzlichen Anfahrgangstufe durchzuführen. Dies ist in der Figur dadurch veranschaulicht, dass die Getriebeeinheit 10 über zwei gestrichelte Doppelpfeile mit der Steuereinheit 20 verbunden ist.

## Patentansprüche

1. Antriebseinheit für ein Kraftfahrzeug mit Hybridantrieb, umfassend eine Brennkraftmaschine (2), eine zumindest motorisch betreibbare elektrische Maschine (6) nebst zugehörigem Energiespeicher (18), eine Getriebeeinheit (10) und eine Steuereinheit (20), wobei
- die Getriebeeinheit (10) Standardgangstufen umfasst,
- die Getriebeeinheit (10) zusätzlich zu den Standardgangstufen mindestens eine Anfahrgangstufe (10c) umfasst, welche ausschließlich während eines Anfahrvorgangs aus dem Stillstand des Fahrzeugs aktivierbar ist, und
- die Steuereinheit (20) derart ausgebildet ist, dass in Abhängigkeit vom Ladezustand des Energiespeichers (18) oberhalb einer definierten Ladungsschwelle der Anfahrvorgang unter Verwendung der elektrischen Maschine im motorischen Betrieb in einer Standardgangstufe erfolgt und bei Vorliegen der definierten Ladungsschwelle und unterhalb der Ladungsschwelle der Anfahrvorgang unter Verwendung der elektrischen Maschine im motorischen Betrieb in der Anfahrgangstufe (10c) erfolgt, wobei die Anfahrgangstufe (10c) eine kürzere Übersetzung aufweist als die kleinste Standardgangstufe.

2. Antriebseinheit nach Anspruch 1,
**dadurch gekennzeichnet, dass** der elektrische Energiespeicher (18) als Leistungskondensatoreinheit, sogenannter Super-Cap, ausgebildet ist.

3. Antriebseinheit nach einem oder mehreren der vorstehenden Ansprüche, **dadurch gekennzeichnet, dass** die mindestens eine zusätzliche Anfahrgangstufe (10c) durch eine zusätzlich zur Getriebeeinheit (10) für den normalen Fahrbetrieb vorhandene Einheit mit stufenloser Übersetzung, ein sogenanntes CVT-Getriebe, realisiert ist.

## Claims

1. A drive unit for a motor vehicle, with a hybrid drive, comprising an internal combustion engine (2), an electric machine (6) which can at least be operated as a motor, as well as an associated energy accumulator (18), a transmission unit (10) and a control unit (20), wherein
- the transmission unit (10) comprises standard gear stages,
- the transmission unit (10), in addition to the standard gear stages, comprises at least one starting gear stage (10c), which can exclusively be activated during a starting process from the stationary position of the vehicle, and
- the control unit (20) is configured in such a way that depending on the charge state of the energy accumulator (18), above a defined charge threshold the starting process takes place using the electric machine in motor operation in a standard gear stage and, when the defined charge threshold is present and below the charge threshold, the starting process takes place using the electric machine in motor operation in the starting gear stage (10c), the starting gear stage (10c) having a shorter transmission ratio than the smallest standard gear stage.

2. A drive unit according to claim 1, **characterised in that** the electric energy accumulator (18) is configured as a power capacitor unit, a so-called super-cap.

3. A drive unit according to any one or more of the preceding claims, **characterised in that** the at least one additional starting gear stage (10c) is realised by a unit, which is present in addition to the transmission unit (10) for normal driving operation, with a continuously variable transmission ratio, a so-called CVT transmission.

## Revendications

1. Unité d'entraînement de véhicule automobile à entraînement hybride comprenant :
un moteur à combustion interne (2), une machine électrique (6) actionnée au moins par moteur ainsi qu'un accumulateur d'énergie (18) associé, une unité de transmission (10) et une unité de commande (20), dans laquelle :
- l'unité de transmission (10) comporte des rapports standards,
- l'unité de transmission (10) comporte, en plus des rapports standards au moins un rapport de démarrage (10c) qui peut être activé uniquement pendant une opération de démarrage à partir de l'état de repos du véhicule, et
- l'unité de commande (20) est réalisée pour qu'en fonction de l'état de charge de l'accumulateur d'énergie (18), au-dessus d'un seuil de charge défini, l'opération de démarrage soit effectuée en utilisant la machine électrique en fonctionnement moteur avec un rapport standard et qu'en présence du seuil de charge défini et si l'on est au-dessous de ce seuil de charge l'opération de démarrage s'effectue en utilisant la machine électrique en fonctionnement moteur avec le rapport de démarrage (10c), le rapport de démarrage (10c) étant un rapport plus court que le plus petit rapport standard.

2. Unité d'entraînement selon la revendication 1,
**caractérisée en ce que**
l'accumulateur d'énergie électrique (18) est réalisé sous la forme d'une unité à condensateur de puissance appelée Super-Cap.

3. Unité d'entraînement selon les revendications précédentes,
**caractérisée en ce qu'**
au moins un rapport de démarrage (10c) supplémentaire est réalisé par une unité à variation continue ou variateur CVT, en plus de l'unité de transmission (10) pour le mode de fonctionnement normal.
